# EUROPÄISCHE PATENTSCHRIFT

(11) **EP 0 492 561 B1**
(45) Veröffentlichungstag und Bekanntmachung des Hinweises auf die Patenterteilung: **14.06.1995**
(21) Anmeldenummer: 91122058.0
(22) Anmeldetag: 21.12.1991
(51) Int. Cl.: F16C 13/00, F28F 5/02

(54) **Verfahren zur Herstellung einer Kühlwalze, sowie Kühlwalze**
Process for manufacturing a chill roller, as well as a chill roller
Procédé de fabrication d'un cylindre de refroidissement, ainsi qu'un cylindre de refroidissement

(30) Priorität: 28.12.1990 DE 4042072
(43) Veröffentlichungstag der Anmeldung: 01.07.1992
(73) Patentinhaber: Behr GmbH & Co., D-70469 Stuttgart (DE); BEHR INDUSTRIETECHNIK GmbH, D-70469 Stuttgart (DE)
(72) Erfinder: Prokopp, Alexander, Dipl.-Ing., W-7101 Abstatt (DE); Hanke, Peter, W-7050 Waiblingen (DE)
(74) Vertreter: Dreiss, Uwe, Prof. Dr. jur. Dipl.-Ing. M.Sc.

(56) Entgegenhaltungen:
- DE-A- 2 430 435
- DE-C- 3 116 967
- DE-U- 8 708 474
- FR-A- 2 194 930
- US-A- 3 197 975

## Beschreibung

Die Erfindung betrifft ein Verfahren zur Herstellung einer Kühlwalze aus Aluminium, die aus einem Außenrohr, einem Innenrohr und in dem Ringraum zwischen beiden angeordneten und mit diesen verlöteten Wellrippen besteht.

Aus der DE-C-3 116 967 (vgl. Sp. 3, Z. 56 bis Sp. 4, Z. 33 und Fig. 1 und 2) ist ein Verfahren zur Herstellung eines vollständig aus Metall (hochtemperaturfesten Stählen: Werkstofffe 1.4725 und 1.4841, Sp. 3, Z. 64-68) bestehenden Körpers bekannt geworden, der durch ein Außenrohr (2) und durch in diesem Außenrohr angeordnete, mit dem Außenrohr verlötete Wellrippen (1) gebildet wird; dabei
- ist das Außenrohr (2) mit einem Längsschlitz versehen;
- wird die durch Außenrohr (2), Wellrippen (1) und Lotmaterialträger (Sp. 4, Z. 8 und 9) gebildete Einheit in eine Spannvorrichtung (4,5) aus Stahl (Invarstahl) eingebracht;
- ist die Breite des Schlitzes unter Berücksichtigung der unterschiedlichen Wärmeausdehnungskoeffizienten der Stähle, aus denen der Körper besteht, und des Stahls, aus dem die Spannvorrichtung besteht derart bestimmt, daß sich der Längsschlitz des Außenrohres bei Erwärmung auf die Löttemperatur schließt, und
- erfolgt durch die radiale Ausdehnung bei der Erwärmung der Wellrippen über den gesamten Umfang gleichmäßig eine Anlage derselben an dem Außenrohr und ein Verlöten miteinander.

Kühlwalzen, die bei hohen Drehzahlen ein über sie laufendes Band zu kühlen vermögen, und bei denen im Ringraum zwischen Innenrohr und Außenrohr Wellrippen fest eingelötet sind, konnte man seither jedoch nicht fertigen. Die Vorrichtungen, die man einsetzte, um Außenrohr und Innenrohr beim Verlöten oder Verschweißen mit den Wellrippen konzentrisch zu halten, die aber gleichzeitig gewährleisten mußten, daß die Wellrippen nicht zerdrückt werden, konnten nicht verhindern, daß sich die Kühlwalze verzog, d.h. nicht mehr tolerierbare Unrundheiten aufwies. Korrigierte man diese, etwa durch Abdrehen oder Abschleifen des Außenrohrs auf einen gleichbleibenden Durchmesser, so ergab sich infolge des dabei notwendigerweise ungleichmäßig erfolgenden Materialabtrags Unwuchten, die bei Drehung der Kühlwalze nicht mehr akzeptiert werden konnten.

Durch die DE-U-8 708 474 ist eine Leichtlaufwalze mit einem Walzenrohr in Schichtbauart bekannt geworden. Sie besteht aus einem Innenrohr und einem Außenrohr, zwischen denen sich wenigstens eine Schicht aus einseitiger Wellpappe befindet. Dadurch entstehen in axialer Richtung verlaufende Kanäle zur Aufnahme von Meßsonden, Gewichten zum Auswuchten und/oder für Stoffe zu Temperierzwecken. Das Außen- und das Innenrohr sind aus faserverstärktem Kunststoff hergestellt. Ob und ggf. wie die Wellpappe mit dem Außen- und/oder Innenrohr verbunden worden ist, läßt sich dieser Druckschrift nicht entnehmen. Aufgrund der verwendeten Materialien kommt ein Verlöten und eine Verwendung als Kühlwalze nicht in Frage.

Aus der US-A-3 197 975 ist ein stationärer Wärmetauscher, bestehend aus Außenrohr, Wellrippen und Innenrohr bekannt. Die genannten Teile werden durch den vom Innenrohr ausgeübten Druck zusammengehalten.

Aufgabe der Erfindung ist es, ein Verfahren der eingangs genannten Art (DE-C-3 116 967) so auszubilden, daß es einfach ist und damit Kühlwalzen geschaffen werden können, die den Beanspruchungen bei hohen Drehzahlen standhalten.

Die Lösung dieser Aufgabe erfolgt durch ein Verfahren mit den Merkmalen des Patentanspruches 1. Die Erfindung betrifft ferner eine mit diesem Verfahren hergestellte Kühlwalze, wie sie in Anspruch 3 angegeben ist.

Die Ansprüche 2, sowie 4 bis 8 betreffen vorteilhafte Weiterbildungen.

Ausführungsbeispiele der Erfindung und ihrer vorteilhaften Weiterbildungen werden im folgenden anhand der beigefügten Zeichnungen näher beschrieben. Es stellen dar:
- Figur 1: eine erstes Ausführungsbeispiel, nämlich eine Kühlwalze 10, eingesetzt in ein Stahlrohr, vor dem Verlöten;
- Figur 2: die Kühlwalze 10 nach dem Verlöten;
- Figur 3: ein Beispiel der Verwendung dieser Kühlwalze zur Kühlung eines Bandes 11;
- Figur 4: einen Längsschnitt durch ein zweites Ausführungsbeispiel;
- Figur 5: das Ausführungsbeispiel nach Figur 1 und 2, jedoch ergänzt durch Naben 22,23.

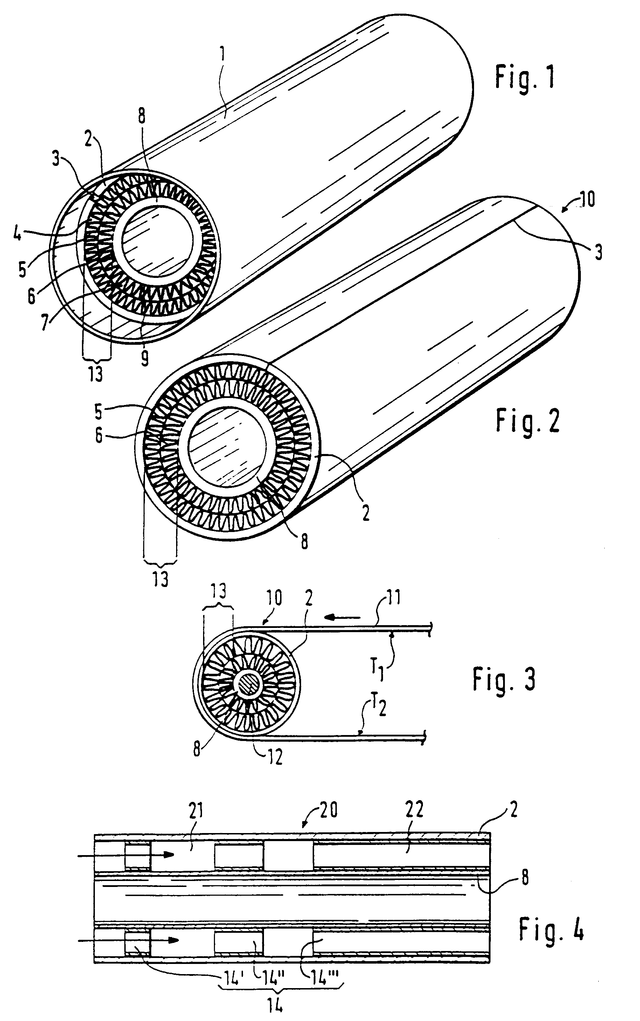

Die in Figur 1 dargestellte Anordnung besteht aus dem Stahlrohr 1, das ungeschlitzt ist und nur zur Herstellung der Kühlwalze verwendet wird. In dieses Stahlrohr 1 wird eine kasettierte Einheit eingesetzt, die aus Außenrohr 2, den Lagen 5,6 von Wellrippen, dem Innenrohr 8 und den lotplattierten Zwischenblechen 4,7,9 besteht. Das Außenrohr liegt mit seiner Außenfläche an der Innenfläche des Stahlrohres 1 an. Das Außenrohr 2 ist mit einem Längsschlitz 3 versehen. Außenrohr, Innenrohr, die Wellrippen und die lotplattierten Zwischenbleche sind aus Aluminium. Die Wellrippen sind ebenfalls lotplattiert. Die Breite des Längsschlitzes 3 ist so bemessen, daß dieser sich bei der zum Verlöten der Wellrippen 5,6 mit den Rohren aus Aluminium erforderlichen Temperaturen von z.B. 610°C schließt. Dies ist die Folge der Tatsache, daß der Wärmeausdehnungskoeffizient von Aluminium größer als der von Stahl ist, so daß sich das Außenrohr 2 bei Erhitzung sehr viel stärker ausdehnt als dies in radialer Richtung möglich ist. Demzufolge findet die Ausdehnung des Außenrohres 2 vorwiegend in tangentialer Richtung statt, wodurch sich der Längsschlitz 3 schließt.

Die gesamte Einheit wird in einen Lötofen gebracht, in dem im Vakuum eine Erwärmung auf über 600°C stattfindet. Das Lot, das die Plattierung der Zwischenbleche 4,7,9 und der Wellrippen 5, 6 bildet, wird bei dieser Temperatur flüssig und sorgt für eine sichere Hartverlötung der Lagen 5,6 von Wellrippen mit den Zwischenblechen einerseits und den Rohren 2,8 andererseits.

Die Zwischenbleche und die Wellrippen dienen als Lotmaterialträger. Das Zwischenblech dient außerdem der Halterung und Verbindung der Lagen Wellrippen 5, 6 zueinander bzw. miteinander.

Wird der Längsschlitz 3 geschlossen, dann zieht sich, da auch an dieser Stelle das Außenrohr 2 in Kontakt mit dem lotplattierten Zwischenblech steht, das Lotmaterial in den Längsschlitz 3 hinein und sorgt für eine Hartverlötung des Längsschlitzes 3. Während des Erhitzungsvorganges unterliegt das ungeschlitzte Innenrohr 1 seiner vollen radialen Ausdehnung und bringt dadurch die Wellrippen in der gewünschten Weise über den gesamten Umfang gleichmäßig zur Anlage am Außenrohr 2 bzw. an der in radialer Richtung nach außen nächsten Lage Wellrippen.

Bei der Erhitzung erfolgt eine feste Verlötung der Zwischenbleche mit den Rohren bzw. mit den Wellrippen. Auf diese Weise entsteht also die in Figur 2 gezeigte Hohlwalze 10 als Verbundkörper aus den Rohren 2,8 und den Lagen Wellrippen 5,6. Infolge des höheren Wärmeausdehnungkoeffizienten des Außenrohres 2 aus Aluminium im Vergleich zum Stahlrohr 1 folgt bei der Abkühlung eine stärkere radiale Schrumpfung des Außenrohres 2 als des Stahlrohres 1, so daß nach erfolgter Abkühlung das Rohr 2 ohne Schwierigkeit aus dem Stahlrohr 1 entnommen werden kann. Da das Aluminium bei der geschilderten Verlötungstemperatur von über 600°C auch bereits sehr weich wird, verbleibt keine Spannung im Aluminium; die bei der Erhitzung erfolgende Verformung in tangentialer Richtung ist vielmehr dauerhaft.

Figur 3 zeigt nun eine Anwendung. Dabei wird die Kühlwalze 10 zur Kühlung eines erhitzten Bandes 11 eingesetzt. Das Band 11 läuft über die Kühlwalze, die auf eine Welle 12 aufgepreßt ist und von dieser gedreht wird. Der mit den Lagen 5,6 von Wellrippen versehene Ringraum 13 zwischen dem Außenrohr 2 und dem Innenrohr 8 wird dann von einem kühlenden Luftstrom durchsetzt, der in Figur 3 senkrecht zur Zeichnungsebene fließt.

Die Kühlwalze 10 gemäß Figur 2 kann auch direkt als Wärmetauscher verwendet werden, z.B. dadurch, daß das eine Medium durch den Ringraum 13 und das andere Medium durch den Innenraum des Innenrohres 8 strömt.

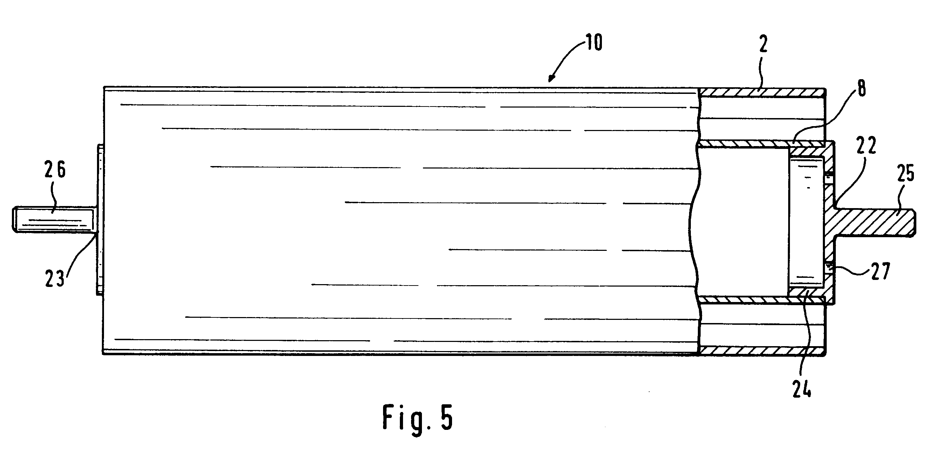

Figur 4 zeigt ein Ausführungsbeispiel, bei dem nur eine Lage Wellrippen, nämlich die Lage 14 Wellrippen, in der Kühlwalze 20 angeordnet ist. Diese Lage von Kühlrippen 14 wird durch drei Wellrippensegmente 14',14'' und 14''' gebildet. Zwischen ihnen bestehen - in Richtung der axialen Erstreckung der Kühlwalze 20 - Abschnitte 21, die nicht mit Wellrippen versehen sind. Durch diese Anordnung kann man eine Vergleichmäßigung der Oberflächentemperatur des Außenrohres 2 über die gesamte axiale Erstreckung der Kühlwalze erreichen.

Man trägt nämlich dadurch der Tatsache Rechnung, daß dann, wenn - in Figur 4 - links, wie durch die eingezeichneten Pfeile angedeutet, ein kühler Luftstrom eintritt, der Kühleffekt auf der linken Seite zunächst sehr stark ist, dann aber mit zunehmender Erwärmung des kühlenden Luftstromes abnimmt, so daß entsprechend die Wärmeaustauschfläche und damit die Berippung durch die Wellrippen nach rechts zunehmen muß. Dementsprechend ist dann auf der rechten Seite eine höhere Dichte Wellrippen vorgesehen als auf der linken Seite, und zwar realisiert durch die abschnittsweise Anordnung derselben, wobei auf der rechten Seite die Rippenabschnitte länger und auf der linken Seite die Abschnitte kürzer sind. Man kann dies alternativ auch dadurch realisieren, daß zwar durchgehend berippte Abschnitte vorgesehen sind, daß die Berippung abschnittsweise aber mit geringer bzw. größer werdender Dichte der Wellrippen erfolgt.

Durch die beschriebene axiale Segmentierung entweder durch rippenlose Bereiche - wie gezeigt - oder aber durch Rippenbereich mit unterschiedlicher Rippendichte kann also das Temperaturprofil längs der Walze beeinflußt werden.

Figur 5 zeigt die Anordnung von Naben 22 und 23 an den Stirnenden der Kühlwalze 10. Die Naben sind aus Stahl und werden in das Innenrohr 8 eingesetzt, solange es noch soweit erhitzt ist, daß seine anschließende Abkühlung eine derartige Durchmesserverringerung ergibt, daß sich durch Aufschrumpfen ein fester Sitz des Innenrohrs 8 auf den Naben 22, 23 ergibt, die topfartig ausgebildet, d.h. mit Innenringen 24 versehen sind. Die Naben 22, 23 weisen ferner Achsstummel 25, 26 auf, die in Lager aufgenommen oder mit dem Drehantrieb dienenden Rädern verbunden sein können. Die Naben können mit Löchern 27 versehen sein, die der Durchführung von Kühlmedium durch das Innenrobr 8 dienen.

### Bezugszeichenliste

- 1: Stahlrohr
- 2: Außenrohr
- 3: Schlitz
- 4: Lotplattiertes Zwischenblech
- 5: Wellrippen
- 6: Wellrippen
- 7: Lotplattiertes Zwischenblech
- 8: Innenrohr
- 9: Lotplattiertes Zwischenblech
- 10: Kühlwalze
- 11: Band
- 12: Welle
- 14: Wellrippen
- 14',14'',14''': Abschnitte von 14
- 20: Kühlwalze
- 21: Wellrippenfreie Abschnitte der Kühlwalze 20
- 22,23: Naben
- 24: Innenring von 22
- 25,26: Achsstummel
- 27: Löcher

## Patentansprüche

1. Verfahren zur Herstellung einer Kühlwalze aus Aluminium, die aus einem Außenrohr (2), einem Innenrohr (8) und in dem Ringraum (13) zwischen beiden angeordneten und mit diesen verlöteten Wellrippen (5,6) besteht, und bei der
(a) das Außenrohr (2) mit einem Längsschlitz (3) versehen wird, dessen Breite unter Berücksichtigung der unterschiedlichen Wärmeausdehnungskoeffizienten des aus Aluminium bestehenden Außenrohrs (2) und eines als Spannvorrichtung dienenden Stahlrohres (1) derart bestimmt ist, daß sich der Längsschlitz des in das Stahlrohr (1) eingesetzten Außenrohres (2) bei Erwärmung auf Löttemperatur schließt;
(b) die durch das Außenrohr (2), das Innenrohr, die dazwischen angeordneten Wellrippen (5,6) und einen Lotmaterialträger (4) gebildete Einheit in das Stahlrohr (1) eingebracht wird;
(c) die in das Stahlrohr (1) eingebrachte Einheit (2,4,56) auf Löttemperatur erwärmt wird, und daß dabei durch die radiale Ausdehnung der Wellrippen (5,6) diese über den gesamten Umfang gleichmäßig zur Anlage am Außenrohr (2) gebracht und mit diesem und dem Innenrohr (8) derart verlötet werden, daß als Folge des Spannungsabbaus bei der Erwärmung ein spannungsfreier Verbundkörper aus Aluminium entsteht.

2. Verfahren nach Anspruch 1, dadurch gekennzeichnet, daß bei einer Kühlwalze (20), bei der die Wellrippen (14',14'', 14''') und die Lotmaterialträger (4,7,9) zwischen Außenrohr (2) und Innenrohr (8) in Längsrichtung nur abschnittsweise vorgesehen und durch wellrippenfreie Abschnitte (21) getrennt sind, die Verlötung axial abschnittsweise erfolgt.

3. Kühlwalze hergestellt nach dem Verfahren gemäß Anspruch 1 oder 2, die durch ein Außenrohr (2), ein Innenrohr (8) und wenigstens einer im Ringraum (13) zwischen diesen angeordneten und mit diesen verlöteten Lage Wellrippen (5,6) besteht, dadurch gekennzeichnet, daß
(a) das Außenrohr (2) einen in axialer Richtung verlaufenden und durch die Verlötung geschlossenen Längsschlitz (3) aufweist; und
(b) Außenrohr (2), Innenrohr (8) und Wellrippen (5,6) aus Aluminium hergestellt sind und einen miteinander fest verlöteten Verbundkörper bilden.

4. Kühlwalze nach Anspruch 3, dadurch gekennzeichnet, daß zur Erzielung eines bestimmten axialen Temperaturprofils eine unterschiedlich dichte Berippung vorgesehen ist, wobei entweder Wellrippen (14',14'',14''') unterschiedlicher Länge zwischen dem Außenrohr (2) und dem Innenrohr (8) in Längsrichtung der Kühlwalze abschnittsweise, getrennt durch wellrippenfreie Abschnitte (21), vorgesehen sind oder bei durchgehender Berippung Wellrippen-Abschnitte geringerer Wellrippendichte vorgesehen sind.

5. Kühlwalze nach Anspruch 3 oder 4, dadurch gekennzeichnet, daß die Wellrippen (5,6) im Ringraum (13) als Lotmaterialträger dienen.

6. Kühlwalze nach Anspruch 5, dadurch gekennzeichnet, daß im Ringraum (13) Zwischenbleche (4,7,9) angeordnet sind, die ebenfalls als Lotmaterialträger dienen.

7. Kühlwalze nach wenigstens einem der Ansprüche 3 bis 6, dadurch gekennzeichnet, daß die Enden des Innenrohres (8) auf Naben (22,23) aufgeschrumpft sind.

8. Kühlwalze nach Anspruch 7, dadurch gekennzeichnet, daß die Naben (22,23) Öffnungen (27) zur Luftdurchführung durch das Innenrohr (8) aufweisen.

## Claims

1. A process for manufacturing a cooling roller of aluminium which comprises an outer tube (2), an inner tube (8) and corrugated ribs (5, 6) which are arranged in the annular space (13) between the inner and outer tubes and which are soldered to same, and in which
(a) the outer tube (2) is provided with a longitudinal slot (3) whose width, having regard to the different coefficients of thermal expansion of the outer tube (2) of aluminium and a steel tube (1) serving as a clamping means, is so determined that the longitudinal slot in the outer tube (2) which is fitted into the steel tube (1) closes when the assembly is heated to soldering temperature;
(b) the unit formed by the outer tube (2), the inner tube, the corrugated ribs (5, 6) arranged therebetween and a solder material carrier (4) is introduced into the steel tube (1);
(c) the unit (2, 4, 5, 6) which is introduced into the steel tube (1) is heated to soldering temperature and in that situation due to radial expansion of the corrugated ribs (5, 6) they are caused to bear against the outer tube (2) uniformly over the entire periphery and are soldered to the outer tube (2) and the inner tube (8) in such a way that a stress-free composite body of aluminium is produced as a result of the reduction in stress in the heating operation.

2. A process according to claim 1 characterised in that in the case of a cooling roller (20) in which the corrugated ribs (14', 14'', 14''') and the solder material carriers (4, 7, 9) between the outer tube (2) and the inner tube (8) are provided only in a portion-wise manner in the longitudinal direction and are separated by corrugated rib-free portions (21), soldering is effected axially in a portion-wise manner.

3. A cooling roller produced by the process according to claim 1 or claim 2, which comprises an outer tube (2), an inner tube (8) and at least one layer of corrugated ribs (5, 6), which is arranged in the annular space (13) between the outer and inner tubes and which is soldered to same, characterised in that
(a) the outer tube (2) has a longitudinal slot (3) which extends in the axial direction and which is closed by the soldering operation; and
(b) the outer tube (2), the inner tube (8) and the corrugated ribs (5, 6) are produced from aluminium and form a composite body which is firmly soldered together.

4. A cooling roller according to claim 3 characterised in that a rib configuration of differing density is provided to achieve a given axial temperature profile, wherein either there are provided corrugated ribs (14', 14'', 14''') of different lengths between the outer tube (2) and the inner tube (8) in a portion-wise manner in the longitudinal direction of the cooling roller, separated by corrugated rib-free portions (21), or in the case of a continuous rib configuration there are provided corrugated rib portions of lesser corrugated rib density.

5. A cooling roller according to claim 3 or claim 4 characterised in that the corrugated ribs (5, 6) in the annular space (13) serve as solder material carriers.

6. A cooling roller according to claim 5 characterised in that disposed in the annular space (13) are intermediate sheets (4, 7, 9) which also serve as solder material carriers.

7. A cooling roller according to at least one of claims 3 to 6 characterised in that the ends of the inner tube (8) are shrunk on to hubs (22, 23).

8. A cooling roller according to claim 7 characterised in that the hubs (22, 23) have openings (27) for air to be passed through the inner tube (8).

## Revendications

1. Procédé de fabrication d'un cylindre de refroidissement, en aluminium, composé d'un tube extérieur (2), d'un tube intérieur (8) et de nervures ondulées (5, 6), disposés dans l'espace annulaire (13) constitué entre ces deux tubes, et brasés à ceux-ci, et dans lequel
(a) le tube extérieur (2) est pourvu d'une fente longitudinale (3), dont la largeur est déterminée, en prenant en considération les différences de coefficients de dilatation thermique du tube extérieur (2) constitué d'aluminium et d'un tube en acier (1) servant de dispositif de serrage, de façon que la fente longitudinale du tube extérieur (2) inséré dans le tube en acier (1) se ferme, au moment du chauffage à la température de brasage;
(b) l'ensemble, constitué par le tube extérieur (2), le tube intérieur, les nervures ondulées (5, 6) disposées entre eux et un support de matériau de brasage (4), est introduit dans le tube en acier (1);
(c) l'ensemble (2, 4, 56) introduit dans le tube en acier (1) est chauffé à la température de brasage et, suite à la dilatations radiale des nervures ondulées (5, 6), celles-ci sont mises en appui, régulièrement, sur la totalité de la périphérie, sur le tube extérieur (2) et brasées à celui-ci et au tube intérieur (8), de manière que, suite à la cessation du serrage, lors du chauffage, se constitue un corps composite en aluminium exempt de tension

2. Procédé selon la revendication 1, caractérisé en ce que, dans le cas d'un cylindre de refroidissement (20), pour lequel les nervures ondulées (14', 14'', 14''') et les supports de matériaux de brasage (4, 7, 9) sont prévus entre tube extérieur et tube intérieur (8), dans la direction longitudinale, seulement par tronçons et sont séparés par des sections (21) exemptes de nervures ondulées, le brasage s'effectue axialement, tronçon par tronçon.

3. Cylindre de refroidissement fabriqué selon le procédé de la revendication 1 ou 2, constitué par un tube extérieur (2), un tube intérieur (8), et au moins une couche de nervure ondulée (5, 6), disposée dans l'espace annulaire (13) constitué entre ces tubes et brasée à ceux-ci, caractérisé en ce que
(a) le tube extérieur (2) présente une fente longitudinale (3) s'étendant en direction axiale et fermée par le brasage; et
(b) le tube extérieur (2) et le tube intérieur (8) et les nervures ondulées (5, 6) sont fabriqués en aluminium et constituent un corps composite formant un assemblage rigide par le brasage.

4. Cylindre de refroidissement selon la revendication 3, caractérisé en ce que, pour atteindre un profil de température axial déterminé est prévu un nervurage de densité différente, soit des nervures ondulées (14', 14'', 14''') de longueurs différentes étant prévues entre le tube extérieur (2) et le tube intérieur (8), en constituant des tronçons dans la direction longitudinale du cylindre de refroidissement, ces tronçons étant séparés par des sections (21) exemptes de nervures ondulées, soit sont prévus, dans le cas ou le nervurage est ininterrompu, des tronçons de nervures ondulées à densité moindre de nervures ondulées.

5. Cylindre de refroidissement selon la revendication 3 ou 4, caractérisé en ce que les nervures ondulées (5, 6) se trouvant dans l'espace annulaire (13) servent de support de matériaux de brasage.

6. Cylindre de refroidissement selon la revendication 5, caractérisé en ce que dans l'espace annulaire (13) sont disposées des tôles intermédiaires (4, 7, 9) servant également de supports de matériau de brasage.

7. Cylindre de refroidissement selon l'une des revendications 3 à 6, caractérisé en ce que les extrémités du tube intérieur (8) sont frettées sur des moyeux (22, 23).

8. Cylindre de refroidissement selon la revendication 7, caractérisé en ce que les moyeux (22, 23) présentent des ouvertures (27) destinées au passage d'air à travers le tube intérieur (8).
